(19) Europäisches Patentamt / European Patent Office / Office européen des brevets

(11) **EP 3 891 457 B1**

(12) **EUROPÄISCHE PATENTSCHRIFT**

(45) Veröffentlichungstag und Bekanntmachung des Hinweises auf die Patenterteilung:
**16.07.2025 Patentblatt 2025/29**

(21) Anmeldenummer: **19816294.3**

(22) Anmeldetag: **04.12.2019**

(51) Internationale Patentklassifikation (IPC):
**F28D 20/00** *(2006.01)* **F28F 27/00** *(2006.01)*

(52) Gemeinsame Patentklassifikation (CPC):
**F28D 20/0056; F28F 27/006;** F28D 2020/0069;
F28D 2020/0082; Y02E 60/14

(86) Internationale Anmeldenummer:
**PCT/EP2019/083678**

(87) Internationale Veröffentlichungsnummer:
**WO 2020/115131 (11.06.2020 Gazette 2020/24)**

(54) **VERFAHREN ZUM AUSFÜHREN EINER ZYKLISCHEN ENERGIESPEICHERUNG UND VORRICHTUNG HIERFÜR**

METHOD FOR PERFORMING CYCLICAL ENERGY STORAGE AND DEVICE THEREFOR

PROCÉDÉ PERMETTANT D'EFFECTUER UN STOCKAGE D'ÉNERGIE CYCLIQUE ET DISPOSITIF À CET EFFET

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: 07.12.2018 DE 102018131256
20.11.2019 DE 102019131345

(43) Veröffentlichungstag der Anmeldung:
**13.10.2021 Patentblatt 2021/41**

(73) Patentinhaber: **ETS Air Systems GmbH**
**07745 Jena (DE)**

(72) Erfinder:
• **KRECH, Thomas**
**99096 Erfurt (DE)**
• **SIPPACH, Dennis**
**07745 Jena (DE)**
• **LANGER, Torsten**
**07646 Stadtroda (DE)**

(74) Vertreter: **Canzler & Bergmeier Patentanwälte Partnerschaft mbB**
**Despag-Straße 6**
**85055 Ingolstadt (DE)**

(56) Entgegenhaltungen:
EP-A1- 3 245 467 GB-A- 2 516 453
US-A1- 2016 231 004

**Beschreibung**

Die Erfindung betrifft ein Verfahren zum Ausführen einer zyklischen Energiespeicherung mit den Merkmalen des Anspruchs 1 und eine Vorrichtung hierfür mit den Merkmalen des Anspruchs 14.

Verfahren zur Energiespeicherung und entsprechende Vorrichtungen zur Energiespeicherung werden gemäß dem bekannten Stand der Technik überall dort angewendet und benötigt, wo Wärme generiert und auf ein Fluid (fest, flüssig, gasförmig, plasma) übertragen wird, bzw. übertragbar ist, wobei diese technisch bedingt nicht effizient übertragen werden kann, zeitversetzt anfällt und daher zwischengespeichert werden muss.

Zudem werden bestimmte technische Prozesse zyklisch ausgeführt, wobei es aber auf eine möglichst konstante Temperierung des Prozessbereichs ankommt, die entweder als ein Heizen, ein Kühlen oder sowohl ein Heizen als auch ein Kühlen ausgeführt werden muss. In einem solchen Fall muss die zyklisch erzeugte Wärme aus dem Prozess abgeführt und im richtigen Zeittakt des zyklischen Prozesses in den Prozessablauf zurückgeführt werden. Im herkömmlichen Stand der Technik kommen im letzteren Fall insbesondere Wärmetauschersysteme zur Anwendung, die mit externen Wärme- oder Kälteträgern gekoppelt werden. Bei derartigen Wärmetauschersystemen wird die im Prozess anfallende Wärme nicht zurückgewonnen oder gespeichert, sondern nach außen abgeführt oder von außen in den Prozess eingespeist. Derartige Prozesse benötigen somit zwangsläufig externe Wärmequellen und Wärmesenken.

Nach dem Stand der Technik werden derartige Wärmetauscher häufig in Form von Rohrbündeln und Plattenanordnungen oder vergleichbaren Strukturen eingesetzt, die sich vor allem durch eine große innere Oberfläche auszeichnen. Die große innere Oberfläche ist notwendig für den optimalen und effizienten Wärmeübergang und eine effektive thermische Kopplung des Prozessbereichs mit der Umgebung. Aus diesem Grund müssen diese Wärmetauschersysteme umso größer dimensioniert werden, je höher die Anforderungen an deren Effizienz gestellt werden.

Aufgrund des strömungstechnischen Aufbaus können derartige Wärmetauschersysteme in verschiedene Bauformen eingeteilt werden. Geläufig sind Kreuzstromwärmetauscher, mit denen eine Wärmerückgewinnung von bis zu 50% möglich ist, sowie Gegenstromwärmetauscher, die einen Wärmerückgewinnungsgrad von bis zu 80% erreichen. Für eine möglichst effiziente Wärmerückgewinnung sind eine möglichst hohe Wärmeleitfähigkeit des Materials des Wärmetauschers, möglichst dünne Übergangsschichten, eine möglichst große wärmetauschende Oberfläche und möglichst hohe Temperaturunterschiede zwischen den thermisch kontaktierten Bereichen von Vorteil. Derartige Wärmetauscher erfordern außerdem ein hinreichend großes Maß an thermischer Isolation, um unerwünschte Wärmeverluste zu minimieren.

Für den schnellen Wärmeübergang sind somit große Temperaturdifferenzen notwendig, da hierdurch die Geschwindigkeit des Wärmeflusses im Material erhöht wird. Bei zu geringen Temperaturdifferenzen sinkt der Rückgewinnungsgrad der Energie entsprechend stark ab. Je dünner die wärmeübertragende Schicht und je größer die Oberfläche zum Wärmeübergang im Wärmetauscher ist, desto geringer ist der Widerstand für den Wärmeübergang.

Das bedeutet somit, dass große Wärmerückgewinnungsraten nur durch geringe Plattenabstände im Wärmetauscher und/oder durch eine Vergrößerung der Systemlänge zur Erhöhung der Oberfläche innerhalb eines vorgegebenen Bauraums realisiert werden können. Außerdem hat sich gezeigt, dass innerhalb konventioneller Wärmetauscher eine turbulente Strömung notwendig ist. Hierdurch kommt es zu einem zum Teil sehr hohen Druckverlust. Anderenfalls kann eine laminare Strömung jedoch nicht genutzt werden, denn bei einer laminaren Strömung entstehen so genannte thermische Bypässe aufgrund eines nicht ausreichenden Wärmeaustauschs mit der wärmeübertragenden Oberfläche. Das Erzeugen der turbulenten Strömung erfordert wiederum zur Überwindung des daraus entstehenden Differenzdrucks einen unverhältnismäßig hohen Energieaufwand und den Einsatz zusätzlicher gerätetechnisch aufwändiger und kostenintensiver Zusatzkomponenten mit einer entsprechenden Dimensionierung, wie beispielsweise Kompressoren, Ventilatoren, Pumpen und dergleichen druckerzeugende Vorrichtungen mehr. Daraus ergibt sich nach dem Stand der Technik, dass Wärmetauscheranordnungen zur zyklischen Wärmerückgewinnung entsprechender zyklischer Prozesse nicht geeignet sind.

Die Energiespeichermöglichkeit als solche ist bei Wärmetauschern nach dem Stand der Technik sehr begrenzt. Dies ergibt sich schon daraus, dass Wärmetauscher aus einem sehr gut wärmeleitenden Material bestehen müssen und somit Wärme schnell durch Ableitung verloren geht. Wärmetauscher lassen sich somit praktisch überhaupt nicht als real wärmespeichernde Komponenten nutzen.

Hinzu kommt die fehlende Anpassbarkeit. Wärmetauscher werden als eine fertig dimensionierte Komponente geplant und in ein gegebenes System eingefügt. Diese Komponente ist im Nachgang nicht nachträglich anpassbar und meist nur schwer zu warten oder zu reparieren.

Bekannte Energiespeichersysteme nach dem Stand der Technik bilanzieren hingegen die notwendigen Gesamtkapazitäten auf Basis der gesamten benötigten Energie- bzw. Wärmemenge oder des zur Verfügung stehenden Platzes. Diese sind in der Regel nicht für einen dynamischen und zyklischen Betrieb ausgelegt, sondern für eine quasi statisch erfolgende Wärmespeicherung konzipiert, die für zyklische Prozesse nicht brauchbar ist. Dokument WO 2016/150462 A1 offenbart ein Energiespeichersystem mit einem Wärmespeichermaterial, das in einem Betriebsmodus, in dem das erste Wärmeträgerfluid oder das zweite Wärmeträgerfluid von einem Fluidanschluss zu einem anderen Flüssigkeitsanschluss. Eine Steuereinheit betreibt die Vorrichtung in einem anderen Betriebsmodus, bis die Auslasstemperatur des ersten Wärmeübertragungsfluids, das aus dem früheren Fluidanschluss abgegeben wird, eine vorgegebene Temperatur erreicht. Der Temperatursensor zur Überwachung des Energiespeichersystem befindet sich am Fluidanschluss.

Es besteht daher die Aufgabe, ein Energiespeichersystem zu realisieren, das effizienter und kompakter als die Systeme nach dem Stand der Technik aufgebaut ist, weniger Druckverlust aufweist und außerdem eine höhere Flexibilität und geringere Verluste aufweist. Das geforderte Verfahren zur Energiespeicherung und die entsprechende Vorrichtung sollen eine Energiespeicherung realisieren, die darüber hinaus für möglichst kurze Prozesszeiten und Prozesszyklen einsetzbar ist und den Wärmefluss dabei möglichst effektiv glätten und gleichmäßig gestalten kann, dass die im Prozessbereich anfallende oder diesem zuzuführende Wärme entsprechend schnell und mit einem Minimum an Verzögerung im Prozesstakt zur Verfügung gestellt werden kann.

Die Lösung der genannten Aufgabe erfolgt mit einem Verfahren zum Ausführen einer zyklischen Energiespeicherung mit den Merkmalen des Anspruchs 1 und einer Vorrichtung hierfür mit den Merkmalen des Anspruchs 15. Die Unteransprüche enthalten zweckmäßige und/oder vorteilhafte Ausgestaltungen und Ausführungsformen von Verfahren und/oder Vorrichtung.

Das erfindungsgemäße Verfahren zum Ausführen einer zyklischen Wärmespeicherung Energiespeicherung für einen Prozessraum in einem zyklischen Betrieb wird unter Verwendung Speichermediums ausgeführt. Das Speichermedium steht im Kontakt mit einem Bereich höherer Temperatur, nachfolgend als Heißseite bezeichnet und mit einem Bereich niedrigerer Temperatur, nachfolgend als Kaltseite bezeichnet. Entweder die Heißseite oder die Kaltseite bildet den zu temperierenden Prozessbereich. Das Verfahren wird innerhalb einer Zykluszeit ausgeführt, wobei sich die nachfolgenden Verfahrensschritte mit folgendem Energiespeicherzyklus wiederholen:

In einem ersten Schritt erfolgt ein Aufheizen des Energiespeichermediums an der Heißseite mittels eines Heißmediums zum Initiieren einer inneren Wärmeübertragung auf das Energiespeichermedium von der Heißseite zu der Kaltseite. Es bildet sich hierdurch eine Wärmefront aus, die von der Heißseite des Energiespeichermediums hin zur Kaltseite voranschreitet.

In Verbindung damit erfolgt ein fortlaufendes Registrieren von Sensorwerten an der Kaltseite des Energiespeichermediums mittels eines Sensors. Die fortlaufende Temperatur wird mit einer voreingestellten Grenztemperatur verglichen. Letztlich wird hierdurch das Voranschreiten der Wärmefront im Energiespeichermedium überwacht und deren Ankunft auf der Kaltseite rechtzeitig registriert.

Nach Erreichen der Grenztemperatur erfolgt ein Zuführen eines Kaltmediums an die Kaltseite des Energiespeichermediums und ein Entladen der gespeicherten Wärme beginnend von der Kaltseite in Richtung der Heißseite des Energiespeichermediums. Es wird hierdurch die im Energiespeichermedium gespeicherte Wärme zur Heißseite hin zurückgeführt, und zwar bevor die Kaltseite des Energiespeichermediums die bestimmte voreingestellte Grenztemperatur überschreitet. Hierdurch werden einerseits passive Energieverluste an der Kaltseite vermieden, andererseits erfolgt über die Vorgabe der Grenztemperatur eine Vordefinition der Zykluszeit der Energiespeicherung.

Die Grenztemperatur kann variabel auf den Prozess eingestellt sein. Ist die gespeicherte Energie zu hoch, kann dadurch überschüssige Energie aus dem System gefahren werden. Alternativen bieten sich durch weiter unten erwähnte Auskreisungen der Fluide und Medien an.

Die genannten Verfahrensschritte werden nun zyklisch wiederholt. Es erfolgt somit ein erneutes Aufheizen des Energiespeichermediums an der Heißseite und somit der Beginn eines erneuten Energiespeicherzyklus.

Grundgedanke des erfindungsgemäßen Verfahrens ist somit eine von vornherein zyklisch angelegte Energiespeicherung, bei der die innere Wärmeleitung im Energiespeichermaterial nahezu vollständig abgestellt wird und bei der die innere Wärmeleitung, oder genauer gesagt, die hierfür vorgegebenen Randbedingungen in Form der Grenztemperatur ein Maß für die Dauer des Energiespeicherzyklus vorgibt. Hier ergibt sich die Möglichkeit der Abstimmung der Energiespeicherung auf einen von vornherein angelegten zyklischen Prozess, die insbesondere dynamisch ausgeführt wird.

Bei einer zweckmäßigen Ausgestaltung des Verfahrens weist der zyklische Betrieb der Energiespeicherung zwei unterschiedliche Phasen auf. Diese sind eine Anlaufphase und eine Arbeitsphase. In der Anlaufphase werden mehrere Energiespeicherzyklen solange durchlaufen, bis die Zykluszeit für jeden Energiespeicherzyklus eine konstante Grenzzykluszeit erreicht hat. Diese ändert sich innerhalb der nächsten Energiespeicherzyklen nicht mehr, sofern der von außen einwirkende Prozess unverändert bleibt.

In der darauffolgenden Arbeitsphase werden dann die Energiespeicherzyklen jeweils innerhalb der Grenzzykluszeit ausgeführt. Die Anlaufphase markiert somit einen Einschwingvorgang der zyklischen Energiespeicherung, die sich in der nachfolgenden Arbeitsphase auf ein dynamisches Gleichgewicht eingestellt hat. In der nachfolgenden Arbeitsphase können dann Energiemengen relativ schnell aus dem Energiespeicher entnommen bzw. in diesen eingebracht werden, wobei die Grenztemperatur schnell erreicht wird bzw. schnell wieder unter diesen Wert absinkt. Dieser Temperaturänderung entsprechen dann die in den Energiespeicherzyklen während der Arbeitsphase zu- bzw. abgeführten Energiemengen im Energiespeicher.

Bei einer weiteren Ausgestaltung des Verfahrens ist das Energiespeichermedium als ein thermisch schlecht leitendes und durchströmbares Material ausgebildet.

Das durchströmbare Material wird von der Heißseite in Richtung der Kaltseite von dem Heißmedium durchströmt und von der Kaltseite zu der Heißseite von dem Kaltmedium durchströmt.

Bei einer weiteren Ausführungsform des Verfahrens ist das Energiespeichermedium auf zwei strömungstechnisch voneinander abgetrennte Energiespeichermodule verteilt. Beide Energiespeichermodule schließen an einen zu temperierenden Prozessraum an und die Energiespeichermodule und der Prozessraum werden von einem Volumenstrom durchströmt. Dabei werden beide Energiespeichermodule im zyklischen Gegentakt betrieben. Hierdurch kann eine besonders glatt verlaufende Temperierung des zyklischen Prozesses ausgeführt werden.

Eine Vorrichtung zum Ausführen einer zyklischen Energiespeicherung an einem Prozessraum mit einem Energiespeichermodul weist erfindungsgemäß folgende Komponenten auf: Es ist ein Energiespeicherkörper aus einem von einem fluiden Medium durchströmbaren Material mit geringer Wärmeleitfähigkeit vorgesehen. Weiterhin ist eine den Wärmespeicherkörper mindestens teilweise umgebende äußere Wärmeisolierung vorgesehen sowie mindestens je ein Anschluss zum Zu- und/oder Ableiten eines Fluids. Außerdem ist mindestens ein am Energiespeicherkörper im durchströmenden Medium angeordneter, die Temperatur des Fluids messender Temperatursensor vorgesehen.

Bei einer Ausführungsform besteht der Energiespeicherkörper aus einer durchströmbaren Keramik mit geringer Wärmeleitfähigkeit. Möglich ist auch eine Ausführung aus mehreren Formkörpern in Form von Monolithen, einem Granulat oder einem Pulver.

Bei einer weiteren Ausführungsform ist eine Anordnung aus zwei, an den Prozessraum anschließenden und strömungstechnisch direkt voneinander getrennten Wärmespeichermodulen vorgesehen.

Die Anordnung aus zwei Energiespeichermodulen kann unterschiedlich konfiguriert sein. Bei einer ersten Ausführungsform sind die Energiespeichermodule beidseitig linear an den Prozessbereich angeschlossen.

Bei einer weiteren Ausführungsform sind die Energiespeichermodule U-förmig an den Prozessbereich angeschlossen.

Die Energiespeicherkörper weisen bei einer beispielhaften Ausführungsform eine prismatische Form mit beliebig wählbarer Grundfläche auf. Hierin sind selbstverständlich zylindrische und quaderförmige Gestaltungen als Möglichkeit mit inbegiffen.

Das Verfahren und die Vorrichtung sollen nachfolgend anhand von beispielhaften Ausführungsformen näher erläutert werden. Zur Verdeutlichung dienen die beigefügten Figuren 1 bis 12. Es werden für gleiche und/oder gleichwirkende Teile dieselben Bezugzeichen verwendet.

Es zeigt:

Fig. 1    den ersten Verfahrensschritt in einer beispielhaften Ausführung,

Fig. 2    den zweiten Verfahrensschritt in einer beispielhaften Ausführung,

Fig. 3    den dritten Verfahrensschritt in einer beispielhaften Ausführung,

Fig. 4    den auf den dritten Verfahrensschritt folgenden erneuten ersten Verfahrensschritt in einer beispielhaften Ausführung,

Fig. 5    eine Darstellung der Zykluszeit in Abhängigkeit von der Zykluszahl,

Fig. 6    eine schematische Darstellung des Temperaturverlaufs an der Kaltseite des Energiespeicherkörpers in Abhängigkeit von der Zykluszahl,

Fig. 7    beispielhafte Querschnittsformen eines Energiespeicherkörpers,

Fig. 8    einen beispielhaften Aufbau eines Energiespeichermoduls,

Fig. 9    einen beispielhaften linearen vertikalen Aufbau aus zwei Energiespeichermodulen mit einem dazwischen befindlichen Prozessbereich,

Fig. 10   einen beispielhaften linearen horizontalen Aufbau aus zwei Energiespeichermodulen mit einem dazwischen befindlichen Prozessbereich,

Fig. 11   einen beispielhaften Aufbau über Eck aus zwei Energiespeichermodulen mit einem daran anschließenden Prozessbereich,

Fig. 12   einen weiteren beispielhaften Aufbau über Eck aus zwei Energiespeichermodulen mit einem daran anschließenden Prozessbereich,

Bei sämtlichen hier erläuterten Ausführungsbeispielen gilt folgende Grundkonfiguration:
Unter dem Begriff "Energiespeicher" wird nachfolgend ein mit einer Materie gefüllter Raum verstanden, der mit einem Fluid durchströmt werden kann. Die zur Energiespeicherung benutzte Materie ist idealerweise ein Material mit geringer Wärmeleitfähigkeit (d.h. ein Wärmeisolator), wobei das Material außerdem eine hohe spezifische Wärmekapazität aufweist. Die Materie im Energiespeicher kann sowohl ein Fluid, insbesondere eine Flüssigkeit, aber auch ein Feststoff als ein Granulat oder ein Pulver, aber auch ein durchströmbarer poröser Festkörper, sein.

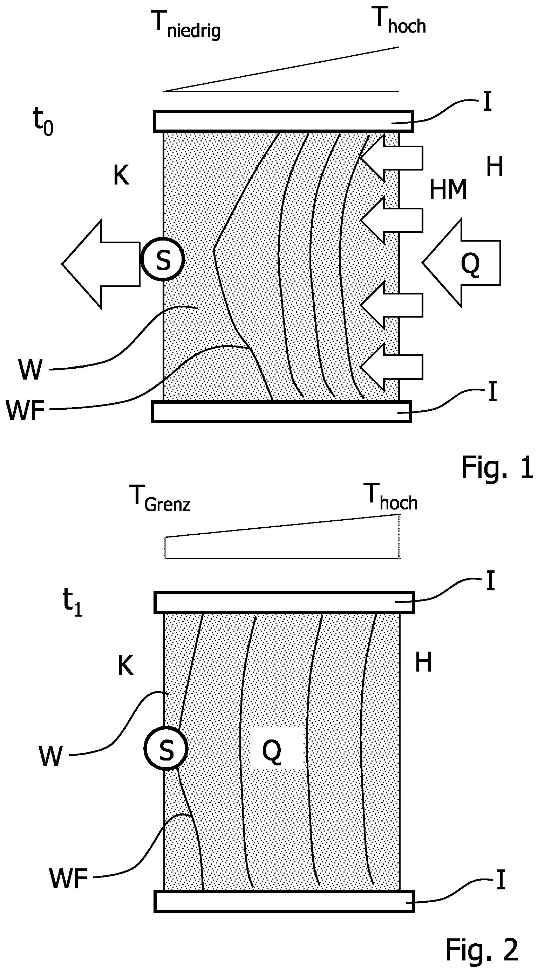

Die Figuren 1 bis 4 zeigen die grundlegenden Verfahrensschritte der zyklischen erfindungsgemäßen Energiespeicherung. Vorgesehen ist hierzu ein Energiespeichermedium W. Das Energiespeichermedium W kann insbesondere eine Keramik mit niedriger Wärmeleitfähigkeit sein, die von einem Fluid durchströmbar ist. Das Energiespeichermedium befindet sich zwischen zwei Bereichen mit unterschiedlicher Temperatur. Der Bereich mit der höheren Temperatur bildet die Heißseite H des Energiespeichermediums W, der Bereich mit der niedrigeren Temperatur bildet die Kaltseite K des Energiespeichermediums. Die Heißseite H oder die Kaltseite K ist dabei einem Prozessraum zugeordnet, der zu temperieren ist und aus dem Energie zyklisch entzogen und in welchen Energie zyklisch wieder zugeführt werden soll. Ist der Prozessraum der Heißseite zugeordnet, wird der Prozess auf einer höheren Temperatur gehalten, also letztlich gewärmt, ist der Prozess der Kaltseite zugeordnet, wird der Prozess auf einer niedrigeren Temperatur gehalten, also letztlich gekühlt.

Die Begriffe "Heißseite" und "Kaltseite" sagen dabei nichts über die Größe des Temperaturunterschiedes zwischen den dabei bezeichneten Bereichen aus, sie geben nur an, auf welcher Seite eine höhere und auf welcher Seite eine niedrigere Temperatur vorliegt. Ebenso werden die nachfolgenden Begriffe "Heißmedium" und "Kaltmedium" nur zur Kennzeichnung des Umstands benutzt, dass die entsprechenden Fluide verschiedene Temperaturen aufweisen.

In dem Beispiel aus Fig. 1 bis Fig. 4 wird die Heißseite H dem zu temperierenden Prozess zugeordnet. Das Energiespeichermedium W ist nach außen hin mit einer thermischen Isolierung I versehen. Bezüglich der Heißseite H und der Kaltseite K besteht jedoch eine thermische Verbindung, ebenso ist es auch möglich, dass Fluide durch das Energiespeichermedium hindurch strömen.

Auf der Kaltseite K des Energiespeichermediums ist ein Sensor S angeordnet. Der Sensor misst eine Messgröße, die Aufschluss über den Energieinhalt des Energiespeichermediums gibt. Der Sensor S ist als ein Temperatursensor ausgeführt, der die Temperatur des Energiespeichermediums im Bereich der Kaltseite misst und an eine hier nicht gezeigte externe Steuereinheit ausgibt. Die externe Steuereinheit regelt während des nachfolgend beschriebenen Energiespeicherzyklus den Fluidstrom zu dem und durch das Energiespeichermedium W. Dies erfolgt insbesondere durch ein Schalten von hier nicht gezeigten Pumpeinrichtungen und durch das Setzen von Ventilstellungen.

In dem in Fig. 1 gezeigten ersten Verfahrensschritt wird von der Heißseite H warmes Fluid als ein Heißmedium HM in Richtung der Kaltseite durch das Energiespeichermedium durchströmt. Das Fluid überträgt dabei nach und nach eine gewisse Energiemenge Q auf das Energiespeichermedium W und heizt es dabei auf. Diese Aufheizung beginnt auf der Heißseite H und schreitet nach und nach in Richtung der Kaltseite K in Form einer Wärmefront WF voran. Es stellt sich dabei im Energiespeichermedium ein Temperaturgefälle zwischen der Heißseite H und der Kaltseite K ein. Auf der Heißseite liegt dabei eine hohe Temperatur $T_{hoch}$ und auf der Kaltseite eine niedrige Temperatur $T_{niedrig}$ vor.

Mit fortschreitender Zeitdauer schreitet die Wärmefront WF durch das gesamte Energiespeichermedium W voran und dringt schließlich bis zur Kaltseite K vor.

Das Eintreffen der Wärmefront WF wird schließlich auf der Kaltseite K durch den dort angeordneten Sensor S registriert. Das messtechnische Kriterium für das Eintreffen der Wärmefront WF besteht im hier vorliegenden Beispiel in dem Erreichen einer bestimmten vordefinierten Grenztemperatur $T_{Grenz}$ auf der Kaltseite K des Energiespeichermediums. Das nun herrschende Temperaturgefälle im Energiespeichermedium stellt sich nun zwischen der hohen Temperatur $T_{hoch}$ auf der Heißseite H und der Grenztemperatur $T_{Grenz}$ auf der Kaltseite K ein.

Sobald die Grenztemperatur $T_{Grenz}$ erreicht worden ist, wird durch die externe Steuereinheit der Fluidfluss von der Heißseite H zur Kaltseite K gestoppt, bevor Energie aus dem Energiespeichermedium W direkt an die Umgebung der Kaltseite K übertreten kann. Dies erfolgt durch das Stellen entsprechender Ventile und/oder Pumpeinrichtungen.

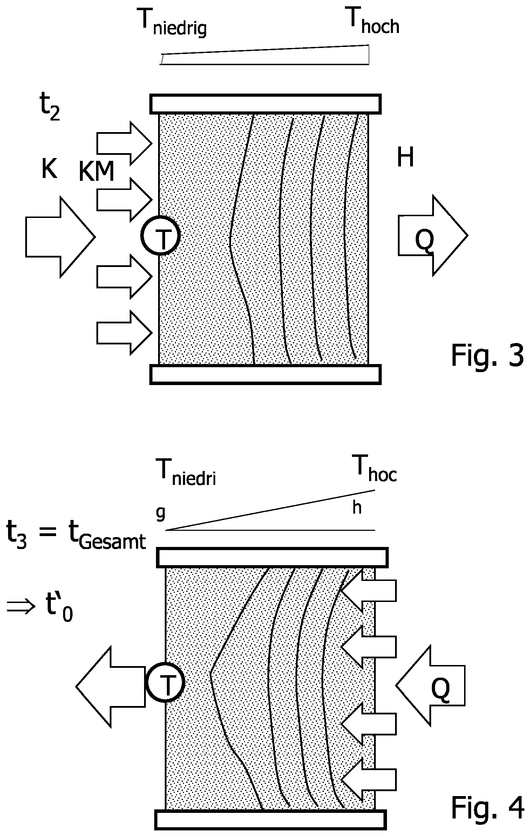

Gemäß Fig. 3 wird durch die Steuereinheit und durch das Umschalten der externen Ventile und/oder Pumpeinrichtungen der Fluss des Fluids umgekehrt. Dieses Umschalten nimmt eine gewisse Umschaltzeit in Anspruch, in der sich das Fluid praktisch nicht bewegt und die daher die für den Prozess eine Totzeit $t_{tot}$ darstellt.

Das Fluid wird nun als ein Kaltmedium KM von der Kaltseite K durch das Energiespeichermedium W hindurch zur Heißseite H geleitet. Infolge dessen sinkt die Temperatur des Energiespeichermediums, die von dem Sensor S registriert wird, unter die Grenztemperatur $T_{Grenz}$ wieder ab. Die Wärmefront WF wird nun von der Kaltseite K zur Heißseite H des Energiespeichermediums W zurückgedrängt. Dabei wird die im Energiespeichermedium W gespeicherte Energie Q wieder an die Heißseite H zurückgeführt.

Für die Zeitdauer dieses Rückführens und für den Zeitpunkt des danach wiederum erfolgenden Umschaltens gilt grundsätzlich als Kriterium, dass das Umschalten dann erfolgt, wenn eine vorgegebene Temperatur des Heißmediums unterschritten wird.

Bei einem kombinierten System aus zwei im Gegentakt arbeitenden Wärmespeichern definiert sich dieser Zeitpunkt als der Moment, an dem am zweiten Wärmespeicher die Temperaturerhöhung an der Kaltseite auftritt.

Das Energiespeichermedium arbeitet somit als ein zyklischer Energiepuffer, der die Energie von der Heißseite H aufnimmt, zwischenspeichert und schließlich wieder an die Heißseite zurückführt.

Die genannten Verfahrensschritte können nun wiederholt werden, wodurch sich der Zyklus schließt und von neuem beginnt. Die Zeitdauer vom Start des Zyklus bis zum Abschluss des Zurücktreibens der Energie Q zur Heißseite wird nachfolgend als Zykluszeit $t_{Zyklus}$ bezeichnet.

Wegen des zyklischen und somit prinzipiell periodischen Verlaufs des hier beschriebenen Betriebs können auch andere Definitionen der Zykluszeit erfolgen. Die Zykluszeit kann auch so definiert werden, dass damit die Zeitdauer von der Erhöhung der Temperatur auf der Kaltseite auf der einen bis zur Erhöhung auf der anderen Seite bezeichnet wird.

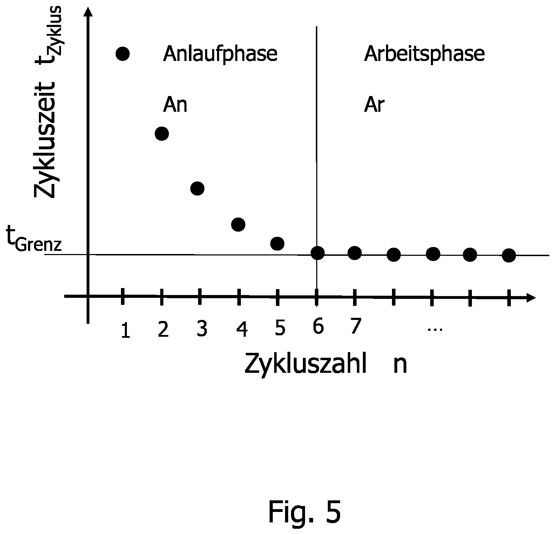

Die Zykluszeit $t_{Zyklus}$ weist eine charakteristische Abhängigkeit von der Anzahl der durchlaufenen Zyklen, d.h. der Zykluszahl n, auf. In Fig. 5 ist diese Abhängigkeit schematisch dargestellt. Zu Beginn des zyklischen Betriebs der Energiespeicherung ist die Zykluszeit zunächst hoch und fällt dann mit zunehmender Zykluszahl ab. Sie stellt sich schließlich auf eine Grenzzykluszeit $t_{Grenz}$ ein, die im Wesentlichen für alle weiteren Zyklen konstant bleibt. Der Bereich der ersten Zykluszahlen, bei denen die Zykluszeit von einem beginnenden Maximalwert absinkt, bildet die Anlaufphase An des zyklischen Verfahrens zur Energiespeicherung. Der Bereich der darauffolgenden Zyklen, in welcher die Grenzzykluszeit erreicht worden ist und bei ansonsten gleichbleibenden Bedingungen im Wesentlichen nur noch um einen konstanten Wert herum schwankt, bildet die eigentliche Arbeitsphase Ar des erfindungsgemäßen zyklischen Verfahrens zur Energiespeicherung.

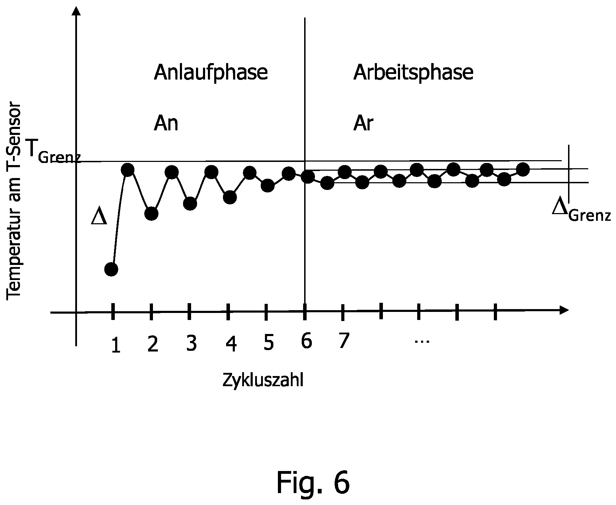

Fig. 6 zeigt die im hier vorliegenden Beispiel am Sensor des Energiespeichermediums, d.h. hier am Temperatursensor, gemessene Temperaturschwankungen in Abhängigkeit von der Zykluszahl. Wie beschrieben ist das Verfahren so ausgebildet, dass die Grenztemperatur $T_{Grenz}$ in einer Steuereinheit vorab festgelegt ist und während des Verfahrens nicht überschritten wird. Die am Sensor anliegende und gemessene Temperatur kann daher lediglich kleiner oder gleich der Grenztemperatur $T_{Grenz}$ sein. Unterhalb der Grenztemperatur $T_{Grenz}$ oszilliert die gemessene Temperatur im Verlauf der durchlaufenden Zyklen innerhalb eines gewissen Schwankungsbereichs, der im hier vorliegenden Diagramm mit $\Delta$ bezeichnet ist. Der Schwankungsbereich $\Delta$ ist zu Beginn der zyklischen Energiespeicherung, d.h. während der Anlaufphase An, vergleichsweise groß, nimmt aber ab und nähert sich bei zunehmender Zykluszahl einem konstanten, von Null allerdings verschiedenen Schwankungsgrenzwert $\Delta_{Grenz}$ an. Die Einstellung des Schwankungsbereichs $\Delta$ auf den erreichten konstanten Schwankungsgrenzwert $\Delta_{Grenz}$ markiert dann den Übergang von der Anlaufphase zur Arbeitsphase des zyklischen Energiespeicherverfahrens. Der Schwankungsgrenzwert $\Delta_{Grenz}$ markiert dann die letztendlich speicherfähige und an den zyklischen Prozess rückübertragbare Energiemenge, die durch das zyklische Energiespeicherverfahren aufgenommen und rückübertragen werden kann.

Als Verfahrensschritte werden somit wie beschrieben ein thermisches Beladen, ein nachfolgendes Umschalten und ein darauffolgendes thermisches Entladen unterschieden. Der Begriff "thermisches Beladen" bezeichnet hier das Einbringen von Energie in das Energiespeichermedium, das Wort "thermisches Entladen" bringt zum Ausdruck, dass Energie von dem Energiespeichermedium wieder abgezogen wird.

Vorteilhaft ist die Verwendung eines Energiespeichers mit einer möglichst schlechten Wärmeleitung. Durch eine gute Wärmeleitung im Energiespeicher wird der Gesamtwirkungsgrad der Energierückgewinnung stark negativ beeinflusst. In einem schlechten Wärmeleiter, d.h. einem thermischen Isolator, wandert bei der Energiespeicherung die Wärmefront nur sehr langsam vorwärts. Die Wärmefront hat dadurch einen steilen Anstieg. Die Wanderung der Wärmefront ist von der Strömungsgeschwindigkeit abhängig. Dadurch wird der Speicher durch das durchströmende Fluid langsam, aber im Wesentlichen vollständig nach und nach mit der eingebrachten Energie so lange gefüllt, bis es zum Durchbruch, d.h. zum Ableiten der eingetragenen Energie in die äußere Umgebung kommt. Dadurch wird auch die Temperaturdifferenz für den Wärmeübergang groß gehalten, so dass der Energiefluss beim schnellen Durchlaufen des Moduls schneller und einfacher vollzogen wird.

Es ist an dieser Stelle darauf hinzuweisen, dass es nicht darauf ankommt, das das Energiespeichermedium durchströmende Fluid einfach nur zu kühlen oder aufzuheizen, d.h. im Ganzen möglichst schnell auf eine hohe bzw. niedrige Temperatur zu bringen. Vielmehr kommt es darauf an, das Energiespeichermedium auf eine möglichst leicht kontrollierbare Weise mit Energie zu beaufschlagen oder von dort Energie wieder zu entnehmen.

Im Unterschied dazu wird bei einem gut wärmeleitenden Material die Energie bereits frühzeitig ausgetragen. Dies geschieht auch bereits dann, wenn der Energiespeicher nur von einem Teil des Zyklusvolumens des Fluids durchströmt worden ist. Genau dieser Effekt soll bei dem erfindungsgemäßen Verfahren ausdrücklich vermieden werden.

Bedeutsam sind hierbei zwei wichtige Gesichtspunkte. Zunächst ist die Verweilzeit bzw. Strömungsgeschwindigkeit des durchströmenden Fluids im Energiespeichersystem so abzustimmen, dass die Energie vom strömenden Fluid auf das Energiespeichermedium so übergehen kann, dass das Energiespeichermedium möglichst gesättigt wird. Ist die Verweilzeit des Fluids zu gering, wird die Energie nicht vollständig auf das Energiespeichermedium übertragen. Der zweite Aspekt betrifft die vollständige Nutzung der Wärmekapazität des Energiespeichers. Bei der Verwendung beispielsweise einer Hohlkeramik ist dadurch eine bestimmte Wandstärke vorgegeben, die möglichst vollständig bei der Wärmeleitung von außen nach innen zur Energiespeicherung ausgenutzt werden muss.

Die für die Wärmeleitung benötigte Zeit ist ebenfalls zu berücksichtigen. Bei einer bestmöglichen Abstimmung der Verweilzeit nimmt im Idealfall fast das gesamte Speichervolumen des Energiespeichermediums die maximal vorgegebene Prozesstemperatur, d.h. im Wesentlichen die Grenztemperatur $T_{Grenz}$ an, bevor die gespeicherte Energie wieder ausgetragen wird.

Vorteilhaft ist zur fluidtechnischen Beschaltung des Fluidflusses durch die mit dem Energiespeichermedium gefüllten Energiespeichermodule die ausschließliche Verwendung von hoch dynamischen Ventilen bzw. Klappen. Dadurch sind entsprechend kurze Schaltzeiten und somit eine Minimierung von Totzeiten möglich.

Das System kann auch so eingesetzt werden, dass der Bereich des zu temperierenden Prozesses kühl gehalten wird und sich zwischen zwei Energiespeichermedien befindet. In einem solchen Fall befinden sich die heißen bzw. warmen Zonen der Energiespeichermedien bezüglich des Prozessraums auf der Außenseite. Eine Anwendung hierzu ist beispielsweise eine Wohnraumbelüftung im Sommer, ohne dass es zu einer Aufheizung des Wohnbereichs kommt. Hier ist eine Einsparung für die Energie der ansonsten noch zusätzlich vorhandenen Klimatechnik möglich. Bei einer derartigen Konfiguration ist jeweils ein Temperaturfühler am Ende und Anfang jedes Energiespeichers sehr zweckmäßig.

Der Energiespeicher wird somit als ein aktives System mit einer Sensorik zur Messung von Parametern des das Energiespeichermedium durchströmenden Fluids und der Temperatur des Energiespeichermediums betrieben. Die Sensorik verhindert einen Energieaustrag bzw. Energieverluste aus einem internen Energierückgewinnungssystem.

In der Startphase des Energiespeichervorgangs ist es möglich, eine nur teilweise Energiebeladung der Speicher auszuführen, um den Energiespeicher schneller betriebsbereit zu machen. Hierdurch kann das Erreichen der Grenzzykluszeit $t_{Grenz}$ beschleunigt werden.

Nachfolgend sollen einige vor allem zeitliche Verfahrensaspekte genauer erläutert werden. Bei den nachfolgenden Ausführungen bezeichnen $V_{Zyklus}$ das Zyklusvolumen, $V_{tot}$ das Totvolumen, $M_{Zyklus}$ die Zyklusmasse, $M_{tot}$ die Totmasse sowie $t_{Zyklus}$ die Zykluszeit und $t_{tot}$ die Umschaltzeit. Es wird bei der nachfolgenden Betrachtung vorausgesetzt, dass sich der Energiespeicher in der Arbeitsphase befindet und die Zykluszeit $t_{Zyklus}$ mit der Grenzzykluszeit $t_{Grenz}$ übereinstimmt. Es gilt somit $t_{Zyklus} = t_{Grenz}$.

Die Umschaltzeit $t_{tot}$ bezeichnet nachfolgend die Zeitdauer, die für das Umschalten der Flussrichtungen des durch das Energiespeichermedium durchströmenden Fluids aufgewendet werden muss. Während dieser Zeit findet weder eine Energieübertragung an das Energiespeichermedium noch eine Energierückgewinnung aus dem Energiespeichermedium statt. Faktisch wird während des Umschaltens kein Fluid durch den Energiespeicher bewegt. Die Umschaltzeit $t_{tot}$ bezeichnet dadurch eine echte Totzeit des gesamten zyklischen Prozesses.

Das Zyklusvolumen $V_{Zyklus}$ ist dabei das Volumen des Fluids, das aktiv während des Durchlaufens eines Zyklus durch das Energiespeichermedium hindurchgetrieben werden kann, das Totvolumen $V_{tot}$ bezeichnet das während der Umschaltzeit im Energiespeichermedium und in den entsprechenden Zuführungen notwendigerweise ruhende und somit nicht bewegte Volumen des Fluids. Die Zyklusmasse $M_{Zyklus}$ ist die dabei während des Zyklus bewegte Gesamtmenge des Fluids, die Totmasse $M_{tot}$ die während der Umschaltzeit $t_{tot}$ notwendigerweise nicht bewegte, d.h. stehende Fluidmenge.

Grundsätzlich gilt vorteilhafterweise, dass die Umschaltzeit $t_{tot}$ klein gegenüber der Zykluszeit $t_{Zyklus}$ sein sollte. Unter dieser Bedingung ist das Zyklusvolumen $V_{Zyklus}$ groß gegen das Totvolumen $V_{tot}$ und es gilt:

$$V_{Zyklus} >> V_{tot}.$$

Ebenso gilt dann, dass die Zyklusmasse $M_{Zyklus}$ groß gegen die Totmasse $M_{tot}$ ist.

$$M_{Zyklus} >> M_{tot}$$

Die jeweiligen Massen können aus den Volumina heraus bestimmt werden, wobei dabei die entsprechenden Zusammenhänge in gasförmigen bzw. flüssigen, d.h. kompressiblen und inkompressiblen Medien berücksichtigt werden.

Während der Umschaltzeit werden im Wesentlichen nur Ventile gestellt oder es werden höchstens die Förderrichtungen von Pumpen verändert. Es gilt vorteilhafterweise, dass die Zykluszeit $t_{Zyklus}$ groß gegen die Umschaltzeit $t_{tot}$ sein sollte:

$$t_{Zyklus} >> t_{tot}.$$

Das Umschalten wird somit in möglichst kurzer Zeit ausgeführt. Befindet sich der zu temperierende Prozessbereich zwischen zwei Energiespeichermodulen und wird der Prozessbereich somit erst von der einen und dann von der entgegengesetzten Richtung durchströmt, wird durch das sehr schnelle Umschalten zwischen den mindestens zwei Energiespeichern innerhalb eines Moduls eine nahezu permanente Strömung des Fluids mit einer Energieübertragung mehr als 90% generiert, die auch auf einen Anteil von über 99% gesteigert werden kann.

Technisch gesehen kann dieses Verfahren im Wirkungsgrad auf Basis der Auslegung variabel erhöht werden, indem der Wärmetauscher sehr lang ausgeführt und die Schaltzeiten extrem kurzgehalten werden. Dies ist nur bis zu einem bestimmten anwendungsspezifischen Punkt wirtschaftlich darstellbar.

Das Gesamtvolumen bzw. die Gesamtmasse des zur Verfügung stehenden Fluids reduzieren sich somit jeweils um die Totvolumina $V_{tot}$ bzw. die Totmassen $M_{tot}$ und zwar in Abhängigkeit von den Teilzeiten der Energiespeicherung, d.h. von der Zykluszeit $t_{Zyklus}$ und der Tot- oder Umschaltzeit $t_{tot}$. Diese berechnen sich aus den folgenden Beziehungen:

Die erforderliche Gesamtzeit $t_{ges}$ der Energiespeicherung ist die Summe aus der Zykluszeit $t_{Zyklus}$ und der Umschaltzeit $t_{tot}$:

$$t_{ges} = t_{Zyklus} + t_{tot} \ [s]$$

Das während der Gesamtzeit umgesetzte Volumen berechnet sich aus den während der Zeiten $t_{Zyklus}$ und $t_{tot}$ umgesetzten bzw. vorhandenen Teilvolumina: $V_{ges} = V_{Zyklus}(t_{Zyklus}) + V_{tot}(t_{tot}) \ [m^3]$. Eine entsprechende Beziehung gilt hier auch für die jeweiligen Teilmassen.

Der Anteil der Zykluszeit an der Gesamtzeit $At_{Zyklus}$ berechnet sich aus dem Verhältnis zwischen der Zykluszeit und der Gesamtzeit:

$$At_{Zyklus} = t_{Zyklus}/t_{ges,}$$

der Anteil der Umschaltzeit an der Gesamtzeit $At_{tot}$ ergibt sich aus:

$$At_{tot} = t_{tot}/t_{ges}.$$

Die Anzahl der Zyklen pro Stunde wird durch einen Faktor F mit Faktor F = 3600s/$t_{ges}$ definiert. Daraus kann der Gesamtvolumenstrom $V_{gesh}$ pro Stunde wie folgt berechnet werden:

$$V_{gesh} = V_{ges} * F \ [m^3/h].$$

Dieser Gesamtvolumenstrom $V_{gesh}$ pro Stunde ergibt sich auch aus der Summe des Schaltvolumens $V_s$ und des Nutzvolumens $V_n$:

$$V_{gesh} = V_n + V_s \ [m^3/h].$$

Unter Verwendung des Faktors F können dabei das Schaltvolumen $V_s$ und das Nutzvolumen $V_n$ je Stunde berechnet werden. Dabei bestimmt sich das Schaltvolumen $V_s$ aus dem Totvolumen $V_{tot}$ unter Verwendung des Faktors F zu $V_s = V_{tot} * F \ [m^3/h]$.

Das Nutzvolumen pro Stunde $V_n$ ist die Summe aus dem Zyklusvolumenstrom $V_{Zyklus}$ pro Stunde [m3/h] und bestimmt sich mit Hilfe des Faktors F zu

$$V_n = V_{Zyklus} * F \ [m^3/h].$$

Die Massen können auch hier entsprechend berechnet werden.

Zur Sicherung einer möglichst großen Kompaktheit des Energiespeichers kann der Energiespeicher modular aufgebaut sein.

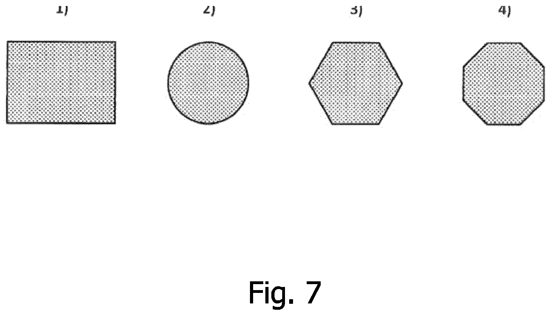

Fig. 7 zeigt beispielhafte Querschnittsformen eines Energiespeichermoduls. Wie die hier gezeigten Beispiele zeigen, ist die Querschnittsform nicht auf eine bestimmte Form eingeschränkt. Sie kann rechteckig, insbesondere quadratisch, kreisförmig bis oval oder polygonal, insbesondere sechseckig oder auch achteckig sein. Die zweckmäßige Wahl des konkreten Querschnitts ergibt sich im Einzelfall aus einer Abwägung des Herstellungsaufwands einerseits, andererseits aus der zweckmäßigen Wahl des Verhältnisses zwischen Volumen und Oberfläche, um zum Einen ein großes Volumen der Energiespeicherung zur Verfügung zu stellen und zum Anderen die Oberfläche und damit die Energieverluste an die Umgebung zu minimieren.

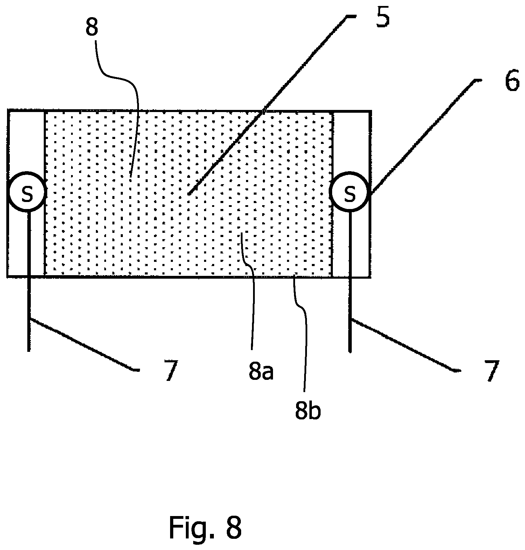

Fig. 8 zeigt den Grundaufbau eines beispielhaften Energiespeichermoduls 8. Das einzelne Energiespeichermodul besteht aus einer Füllung 5 aus einem Energiespeichermaterial. Diese Füllung bildet den Energiespeicherkörper 8a. Der Energiespeicherkörper ist nach außen hin mit einer thermischen Isolierung 8b umgeben. Das Energiespeichermaterial dient als Energiespeichermasse. Dieses Energiespeichermaterial ist zweckmäßigerweise von einem Fluid durchströmbar und kann beispielsweise als eine lockere Keramikschüttung oder ein poröser Keramikkörper ausgebildet sein. Das Energiespeichermaterial ist von einem Modulgehäuse 6 umgeben. Innerhalb des Modulgehäuses erfolgt die Zu- bzw. Abfuhr des Fluids. Über Temperaturfühler 7 wird die Temperatur des Fluids am Aus- und Eingang des Energiespeichermoduls sowie die Temperatur des Energiespeichermoduls in der Füllung 5 fortlaufend überwacht.

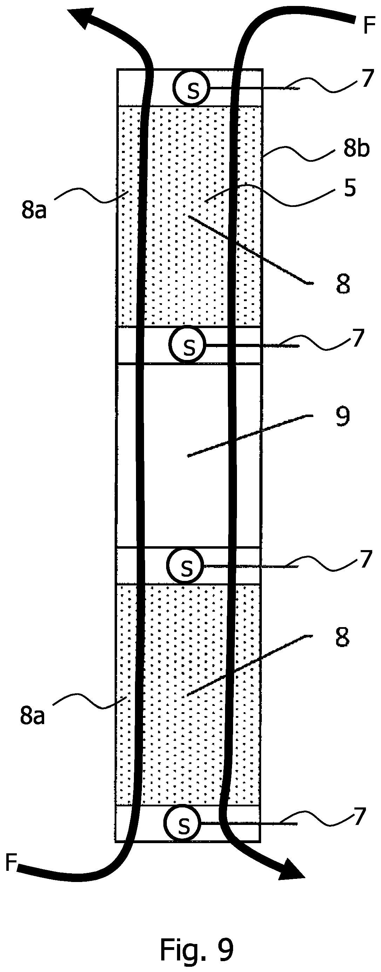

Fig. 9 zeigt eine Kopplung von Energiespeichermodulen 8 in einer senkrechten Konfiguration. Auch in dieser Konfiguration ist jeweils eine Füllung 5, ein Modulgehäuse 6 und Temperaturfühler 7 vorgesehen. Jedes der Energiespeichermodule enthält einen Energiespeicherkörper 8a, der insbesondere durch die Füllung mit dem Energiespeichermaterial ausgebildet ist, und eine äußere thermische Isolierung 8b, die insbesondere ein Teil des Modulgehäuses ist. Zwischen den gekoppelten Energiespeichermodulen befindet sich der Prozessbereich 9, der einen Strömungsrichtungsumkehrbereich darstellt, in und aus dem das Fluid F in bzw. aus den Energiespeichermodulen eingeleitet bzw. ausgeleitet werden kann. Dieser Strömungsrichtungsumkehrbereich beinhaltet den zu temperierenden Prozess und markiert somit den zu temperierenden Prozessbereich 9.

Beide Energiespeichermodule arbeiten zur Temperierung des Prozessbereichs 9 im Strömungsumkehrbereich im Gegentakt. Der Prozessbereich 9 bildet dabei einen Strömungsumkehrbereich, der von zwei Seiten in Abhängigkeit vom Arbeitstakt in entgegengesetzten Richtungen durchströmt werden kann. Prinzipiell geschieht dies so, dass aus einem heißen, d.h. mit Energie beladenen Energiespeichermodul Fluid durch den Strömungsumkehrbereich 9 hindurch in das kalte Energiespeichermodul überführt wird, wobei somit ein interner Energieübertrag zwischen den beiden gekoppelten Modulen erfolgt und ein Austritt der gespeicherten Energie in die Umgebung aus dem heißen Energiespeichermodul unterbleibt. Die Umlagerung des Fluids zwischen den Energiespeichermodulen erzeugt gleichsam eine vorbestimmte Richtung, in welcher gespeicherte Energie vorzugsweise auf vorherbestimmte Weise abfließen kann.

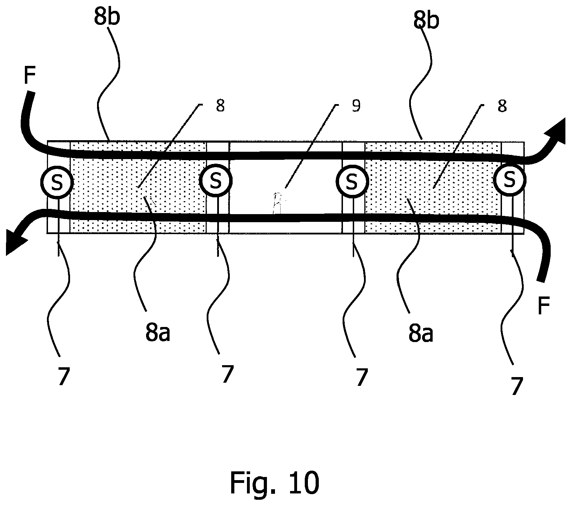

Die Kopplung zwischen den Energiespeichermodulen und dem Strömungsumkehrbereich kann geometrisch und in ihrer Position sehr variabel gestaltet sein. In Fig. 10 ist beispielsweise die Kopplung in einer horizontalen Konfiguration ausgeführt.

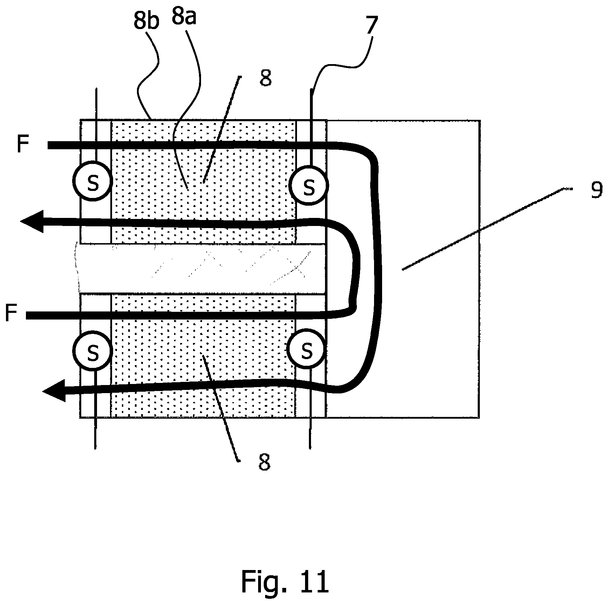

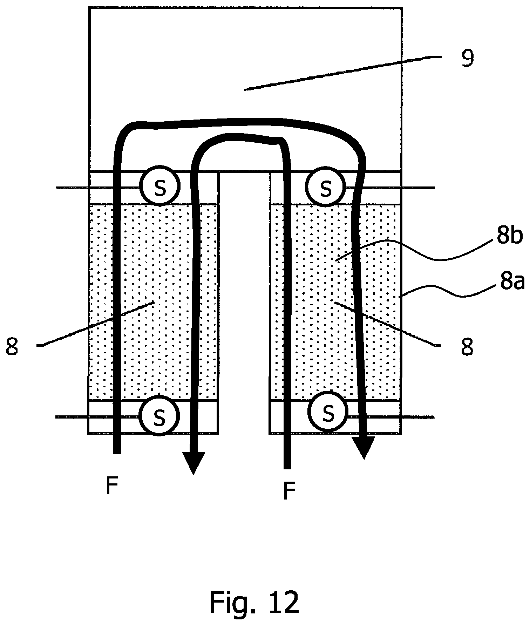

Sowohl in dem Beispiel aus Fig. 9 als auch in dem Beispiel aus Fig. 10 sind die Energiespeichermodule 8 linear hintereinander aufgereiht. Auch diese Konfiguration stellt nur ein mögliches Ausführungsbeispiel dar. Die Beispiele aus den Figuren 11 und 12 zeigen gewinkelte Anordnungen zwischen den Energiespeichermodulen, bei denen das Fluid zumindest um einen Winkel zwischen den beiden Energiespeichermodulen herumgeführt wird. Die beiden Energiespeichermodule sind ansonsten voneinander getrennt, so dass kein direkter Fluid- oder Energieübertrag zwischen den einzelnen Modulen stattfinden kann.

Eine Vorrichtung zur Temperierung eines Prozessbereichs basiert somit zweckmäßigerweise auf einer Anordnung aus mindestens zwei Energiespeichern, insbesondere aus mindestens zwei Energiespeichermodulen, die abwechselnd mit Energie aus dem Fluid be- und entladen werden, das an dem zu temperierenden Prozess vorbei und durch das Modul strömt. Die zu speichernde Energie und zur Verfügung stehende Gesamtenergiekapazität wird hierdurch in kleine Anteile zerlegt und über das durchströmende Fluid oft hin und her geschaltet. Je öfter die Speicher be- und entladen werden, desto kleiner muss die Kapazität des einzelnen Energiespeichermoduls ausgelegt sein. Durch diese Verfahrensweise wird der Energieschlupf auf ein Minimum reduziert.

Die Konfiguration mit den mindestens zwei Energiespeichermodulen kann verschiedene Formen aufweisen. Mehrere Energiespeichermodule können gemäß der Darstellungen in Fig. 9 und 10 insbesondere gerade oder gemäß der Darstellungen in den Figuren 11 und 12 in einem oder mehreren Winkeln oder über Rundungen an den Strömungsumkehrbereich 9 anschließen.

Bei dem Aufbau aus Fig. 9 ist der Strömungsumkehrbereich 9 zwischen zwei Energiespeichermodulen 8 angeordnet. Diese gesamte lineare Anordnung wird von einem durchgehenden Fluidstrom F in alternierenden Richtungen durchströmt. Im Takt des Gesamtprozesses wechselt dabei die Strömungsrichtung innerhalb des Gesamtsystems und insbesondere im Strömungsumkehrbereich 9, der den zu temperierenden Prozess enthält. Mehrere Temperatursensoren 7 sind dabei an den Energiespeichermodulen 8 vorgesehen und registrieren dabei die in den Energiespeichermodulen vorliegenden Temperaturen.

Diese lineare Anordnung gemäß Fig. 9 lässt sich sowohl vertikal als auch horizontal konfigurieren. Der den zu temperierenden Prozess beinhaltenden Strömungsumkehrbereich wird dabei entweder seitlich oder zwischen dessen Oberseite und dessen Unterseite von den Energiespeichermodulen eingeschlossen.

Ausführungsseitig sind der lineare Aufbau mit der Prozessbereich zwischen den mindestens zwei Energiespeichern aufgrund der einfachen Herstellung und ein senkrechter Aufbau mit den zwei oder mehr Energiespeichern parallel nebeneinander und der Prozessbereich am Übergang zwischen den mindestens zwei Energiespeichern am oberen Ende zur verbesserten Energierückführung durch Nutzung der Konvektion von Vorteil. Kombinationen und Abwandlungen daraus sind ebenfalls möglich.

Bei der Ausführungsform aus Fig. 11 und der Ausführungsform aus Fig. 12 wird das strömende Fluid F in alternierenden Richtungen über Eck geleitet. An den Strömungsumkehrbereich 9 schließen sich die Energiespeichermodule 8 an einem gemeinsamen Seitenbereich an.

Als Fluid F kommen Gase, insbesondere He, N, $H_2$, $CO_2$, CO, $O_2$, andere Gase oder Mischungen z.B. Erdgas oder Luft, Plasma oder Dampf in Betracht. Verwendbar sind ebenfalls Flüssigkeiten, ionische Flüssigkeiten oder auch Schmelzen. Ebenfalls können fluidähnliche Feststoffe, insbesondere in Form einer Schüttung, wie beispielsweise Sande oder Kombinationen aus Gasen, Flüssigkeiten, Plasmen sowie fluidähnlichen Feststoffen verwendet werden. Letztere können beispielsweise Sande, Pulver oder Granulate sein, die insbesondere fließfähig sind.

Die Zykluszeit $t_{Zyklus}$ der hier gegebenen Konfigurationen liegt in der Regel im Minutenbereich, beispielsweise maximal 10 Minuten und minimal 20 Sekunden. Die Umschaltzeit $t_{tot}$ liegt in der Regel im Sekundenbereich, beispielsweise maximal 3 Sekunden und minimal 1 Millisekunde.

Das Verhältnis aus der Zykluszeit $t_{Zyklus}$ und der Umschaltzeit $t_{tot}$, d.h. der Quotient $t_{Zyklus}/t_{tot}$ muss möglichst groß gestaltet sein, um das Totvolumen gering zu halten und einen nahezu kontinuierlichen Strom zu erzeugen. Das Verhältnis sollte zweckmäßigerweise mindestens 100 betragen. Vorteilhaft ist ein Verhältnis von 500 oder größer als 1.000. Je größer der Faktor ist, desto höher ist die theoretisch mögliche Energierückgewinnung.

Das Verhältnis aus dem Zyklusvolumen $V_{Zyklus}$ (Bsp. 100 m³/h) und dem Totvolumen $V_{tot}$ (Bsp. 0,45 m³/h) des Fluids, d.h. der Quotient $V_{Zyklus}/V_{tot}$ sollte innerhalb der gegebenen Zykluszeit einen Wert von 100 nicht unterschreiten. Vorteilhaft ist ein Verhältnis des Zyklusvolumens zum Totvolumen im Bereich von 200 oder sogar mehr als 300.

Die Einspeisung des kalten Fluids erfolgt zweckmäßigerweise über ein temperaturgeregeltes System. Hierdurch wird eine kontrollierte Temperatur in den Speichern und ein Überheizungsschutz sichergestellt. Die Temperaturregelung ist an jeder Stelle vor den Speichern möglich.

Im Rahmen des Verfahrens ist es prinzipiell jederzeit möglich, warmes Fluid auch aus dem Energiespeicherprozess auszukreisen. Das warme Fluid kann hierdurch zur Nutzung der Energie in anderen Prozessen verwendet werden und dessen Abziehen ermöglicht einen Überhitzungsschutz sowohl des Energiespeichers als auch des temperaturkontrollierten Prozesses. Ein derartiges Auskreisen des warmen Fluids ist praktisch zu jedem Zeitpunkt vor und nach dem Speichern sowie aus dem Prozessbereich der Energie möglich.

Der Prozess des Einspeisens und der Auskreisung des Fluids können parallel ablaufen.

Es kann eine Parallelschaltung mehrerer Module zur Erhöhung des Durchsatzes, des Volumenstroms oder zur Minderung der Pressung oder des Druckverlustes über das System erfolgen.

Es ist möglich in den Prozessraum eine weitere Materie als Speichererhöhung oder Funktionseinheit einzubringen. Eine Reihenschaltung mehrerer Module kann zur Kombination mehrerer Analysesysteme mit verschiedenen Temperaturen, mehrerer hintereinander ablaufender Stofftrennungs- oder Stoffumwandlungsprozesse bei anderen Eingangsparametern, mehrerer sowohl verschiedener als auch gleicher sich wiederholender Reaktionsschritte beispielsweise zur Erhöhung der Ausbeuten erfolgen.

Das Verfahren zur Energiespeicherung und die hier beispielhaften vorrichtungsseitigen Konfigurationen weisen den Vorteil auf, dass die Temperatur am Ausgang des Energiespeichersystems nur knapp oberhalb der Eingangstemperatur liegt. Dadurch werden alternative Sensoren weniger thermisch belastet und es können Sensoren Verwendung finden die bisher nicht eingesetzt werden konnten. Beispielsweise kann hierdurch eine Regelung der Prozesstemperatur nach den Reaktionsprodukten erfolgen.

Das Verfahren zur Energiespeicherung und die hier beispielhaften vorrichtungsseitigen Konfigurationen weisen den Vorteil auf, dass der Verfahrensablauf praktisch ohne ein träges Nachlaufen gestoppt werden kann. Hierdurch ist ein relativ schnelles Wieder-Anfahren des Systems möglich, sofern die Stillstandzeit nicht zu lang ausgedehnt wird und genug gespeicherte Energie im System verbleibt. Einfache Anpassungen des Systems sind in einfacher Weise auch nachträglich möglich, und zwar durch Anpassung des Energiespeichermaterials, der Sensorik, der Steuerungsparameter, durch Anpassung der Energiespeichergeometrie, der Energiespeichermasse und der Energiespeicheroberfläche.

Der Energiespeicher ist zweckmäßigerweise zerlegbar ausgebildet und daher einfach zu reparieren. Vorteilhaft ist hier eine modulare Gestaltung, bei der sich insbesondere die Füllung aus dem Modulgehäuse als Bauteil entfernen und austauschen lässt. Die Gesamtanordnung kann hierdurch in einfacher Weise teilweise oder ganz ersetzt, repariert und gewartet werden. Eine Speicherung der Energie ist sowohl positiv in Form von Wärme, als auch negativ, in Form von Kälte, entsprechend den Erwärmungs- bzw. Kühlprozessen möglich.

Die Energierückgewinnung ist auch bei sehr kleinen Temperaturunterschieden von weniger als 10K, insbesondere weniger als 5K und auch noch bei einer Temperaturdifferenz von weniger als 1K möglich.

Der Wärmetauscher innerhalb des internen Energierückgewinnungssystems kann mit einem variablen Volumenstrom zwischen Null und einem maximalen Wert betrieben werden. Bei einem Volumenstrom von nahezu Null ist der Wärmeübergang fast vollständig. Die Zykluszeit nimmt sehr große Werte an, während der Anteil der Schaltzeit im Vergleich dazu sehr klein wird.

Der maximale Wert für den Volumenstrom ist hingegen von der Strömungsgeschwindigkeit, der inneren Oberfläche des Energiespeichers, der Temperaturdifferenz und weiteren Größen abhängig. Oberhalb des maximalen Wertes kann die Wärme nicht mehr vollständig auf den Energiespeicher übertragen werden und strömt mit dem Fluid im Wesentlichen nur am Energiespeicher vorbei. In diesem Fall würde der Anteil der Schaltzeit zu groß und der Wirkungsgrad würde einbrechen. Der maximale Wert für den Volumenstrom ist somit eine systemspezifische Größe.

Es ist eine sehr kompakte Bauweise der einzelnen Energiespeichermodule möglich, da die Isolation aufgrund der kurzen Schaltzeiten und der damit verbundenen starken Reduzierung der Energieleitung zwischen den Energiespeichern entfallen oder zumindest stark reduziert werden kann.

Aufgrund der sehr hohen Energierückgewinnung kann neben Erdgas nunmehr auch elektrischer Strom als Heizmedium eingesetzt werden. Dies ist auch für große Fluidströme möglich. Idealerweise findet hierzu Strom aus regenerativen Quellen zur nachhaltigen $CO_2$ Minderung Anwendung. Möglich wäre zur Steigerung der Nachhaltigkeit auch die Verwendung von Wasserstoff als Heizmedium.

Das Verfahren zur Energiespeicherung und Rückführung kann bei verschiedenen Systemen und in verschiedenen Anwendungsfeldern verwendet werden: Ein erstes Anwendungsgebiet sind Analysesysteme: Dies betrifft insbesondere Verfahrensabläufe und Prozesse, bei denen ein durch ein Fluid um- oder durchströmter Sensor auf einer Temperatur bzw. in einem bestimmten Temperaturbereich gehalten werden muss.

Ein weiteres Anwendungsgebiet betrifft thermische Systeme, insbesondere thermische Verfahren zur Energieenergieübertragung (Erwärmung, Kühlung), zur Stofftrennung und/oder Stoffumwandlung z.B. Extraktion, Rektifikation, Adsorption, Desorption, Trocknung, Katalyse, bei denen bestimmte Temperaturbereiche eingehalten werden müssen sowie anfallende Energiemengen in ein bestimmtes System oder Systemabschnitte zurück überführt werden müssen.

Weiterhin kann das erfindungsgemäße Energiespeicherungsverfahren bei Reaktionssystemen angewendet werden, so insbesondere bei Oxidations-, Reduktions-, Syntheseverfahren, bei denen ein Medium auf eine bestimmte Temperatur erwärmt werden muss.

Das erfindungsgemäße Energiespeicherungsverfahren kann auch bei Fluidaustauschsystemen angewendet werden, insbesondere in Verbindung mit einer Sensorik zur Überwachung, Regelung und Einstellung von Werten oder Bereichen für Zusammensetzungen von Fluiden, wie zum Beispiel Wasserstoff, Stickstoff, Kohlenmonoxid, Kohlendioxid, Sauerstoff, bei denen die relative Luftfeuchte, die Temperatur, organische Schadstoffe oder anderen Gase, Flüssigkeiten und Partikeln bzw. Fluide nach Definition und Mischungen aus diesen kontrolliert werden müssen.

Ein weiteres Einsatzgebiet stellen Öfen mit Gasbrennern dar, bei denen eine Zufuhr von vorgewärmtem Sauerstoff ausgeführt werden soll. Hier kann durch das erfindungsgemäße System eine Steigerung der Ofentemperatur und damit der Effizienz des Ofens erreicht werden.

Ein weiteres Anwendungsfeld ist das Auskondensieren von Flüssigkeiten unterhalb des Taupunktes bzw. durch die Verwendung von Adsorbenzien.

In einer Form der Ausführung kann das Verfahren so mit einem Prozess verknüpft sein, dass durch die Luftführung ein Umluftsystem entsteht, das durch das Verfahren getempert wird, beispielsweise für einen Sinterofen.

Die Anwendungen können auch in kombinierten Verfahren verwendet werden, bei denen mehrere der oben genannten Anwendungsgebiete gekoppelt werden.

Abschließend soll kurz die erreichten vorteilhaften Wirkungen des erfindungsgemäßen Energiespeichers noch einmal zusammengefasst werden:
Der Energierückgewinnungsgrad kann bis 99,99% betragen. Er ist unabhängig von der Temperaturdifferenz. Der Energierückgewinnungsgrad ist steuerbar. Der über die Energiespeichermodule abfallende Druckverlust kann variabel ausgelegt werden und ist im Vergleich zu Standardwärmetauschern wesentlich geringer. Der Volumenstrom des Fluids ist frei wählbar, wobei dies abhängig von Ventilatorleistung oder der Leistung der Pumpe ist, die jeweils das strömende Fluid umtreiben. Der Betrieb des Energiespeichers erfolgt über eine aktive Steuerung. Die gesamte Anordnung ist flexibel durch einen modularen Aufbau. Es ist eine Gewichtseinsparung von 50% gegenüber Gegenstromplattenwärmetauschern erreichbar.

Der erfindungsgemäße Energiespeicher weist eine kompakte und variable Form auf. Der Druckverlust ist individuell anpassbar. Die Nutzung überschüssiger Energie ist direkt möglich. Die Verwendung einer Keramik als energiespeicherndes Material bedingt eine Temperaturstabilität von bis zu 1.200°C. Es liegt eine hohe chemische Resistenz vor, insbesondere bei der Verwendung von keramischen Materialien zur Energiespeicherung. Eine Keramik weist einen geringeren Wärmeausdehnungskoeffizienten gegenüber Metallen z.B. Stahl, Edelstahl auf, so dass dieser gegenüber Standardwärmetauschern langzeitstabil ist. Durch die erreichbare Kompaktheit der Systeme wird auch die absolute thermische Ausdehnung bei einem gleichbleibenden Volumenstrom minimiert.

Die erreichbare Nutzungsdauer kann mehr als 10 Jahre betragen. Die modulare Gestaltung des Energiespeichers bedingt einen einfachen, zerlegbaren Aufbau mit preiswerten Ersatzteilen und einer hohen Verfügbarkeit.

Das erfindungsgemäße Verfahren und die erfindungsgemäße Vorrichtung wurden anhand von Beispielen erläutert. Im Rahmen fachmännischen Handelns sind weitere Ausgestaltungen möglich. Weitere Ausführungsformen ergeben sich außerdem aus den Unteransprüchen.

Bezugszeichenliste

| An | Anlaufphase |
|---|---|
| Ar | Arbeitsphase |
| F | Fluid |
| H | Heißseite |
| HM | Heißmedium |
| I | thermische Isolierung |
| K | Kaltseite |
| KM | Kaltmedium |
| Q | Energiemenge |
| T | Temperatursensor |
| S | Sensor |
| W | Energiespeichermedium |
| WF | Wärmefront |
| 1 | quadratisch |
| 2 | kreisförmig |
| 3 | sechseckig |
| 4 | achteckig |
| 5 | Füllung mit Energiespeichermaterial |
| 6 | Modulgehäuse |
| 7 | Temperaturfühler |
| 8 | Energiespeichermodul |
| 8a 8b | Energiespeicherkörper thermische Isolierung |
| 9 | Strömungsumkehrbereich |

**Patentansprüche**

1. Verfahren zum Ausführen einer zyklischen Energiespeicherung für einen Prozessraum (P) in einem zyklischen Betrieb unter Verwendung eines Energiespeichermediums (W) mit einer Heißseite (H) und einer Kaltseite (K) mit folgenden innerhalb einer Zykluszeit ($t_{Zyklus}$) wiederholten Verfahrensschritten mit folgendem Energiespeicherzyklus:

   - Aufheizen des Energiespeichermediums (W) an der Heißseite (H) mittels eines Heißmediums (HM) zum Initiieren einer Energieübertragung auf das Energiespeichermedium (W) von der Heißseite (H) zu der Kaltseite (K),
   - Fortlaufendes Registrieren der Sensorwerte an der Kaltseite (K) des Energiespeichermediums (W) mittels eines auf der Kaltseite des Energiespeichermediums (W) angeordneten und die Temperatur des Energiespeichermediums (W) im Bereich der Kaltseite (K) messenden Sensors (S) und Vergleich mit einem voreingestellten Grenzwert ($S_{Grenz}$) (Fig. 2 und 6),
   - wobei ein Registrieren einer durch das Energiespeichermedium (W) voranschreitenden und auf der Kaltseite (K) eintreffenden Wärmefront (WF) durch den Sensor (S) erfolgt,
   - Nach Erreichen des Grenzwertes ($S_{Grenz}$) Zuführen eines Kaltmediums (KM) an die Kaltseite (K) des Energiespeichermediums (W) und Entladen der gespeicherten Energie beginnend von der Kaltseite (K) in Richtung der Heißseite (H) des Energiespeichermediums (W),
   - wobei ein Zurückdrängen der Wärmefront (WF) von der Kaltseite (K) zur Heißseite (H) des Energiespeichermediums (W) erfolgt,
   - Erneutes Aufheizen des Energiespeichermediums (W) an der Heißseite (H) und Beginn eines erneuten Energiespeicherzyklus.

2. Verfahren nach Anspruch 1, **dadurch gekennzeichnet, dass** der zyklische Betrieb eine Anlaufphase (An) und eine Arbeitsphase (Ar) aufweist, wobei in der Anlaufphase mehrere Energiespeicherzyklen solange durchlaufen werden, bis die Zykluszeit ($t_{Zyklus}$) für jeden Energiespeicherzyklus eine konstante Grenzzykluszeit ($t_{grenz}$) erreicht hat, und wobei in der Arbeitsphase die Energiespeicherzyklen jeweils innerhalb der Grenzzykluszeit ($t_{grenz}$) ausgeführt werden.

3. Verfahren nach Anspruch 1 oder 2, **dadurch gekennzeichnet, dass** das Energiespeichermedium (W) als ein thermisch schlecht leitendes Material ausgebildet ist, wobei das thermisch schlecht leitende Material von der Heißseite (H) in Richtung der Kaltseite (K) von dem Heißmedium (HM) und von der Kaltseite (K) zu der Heißseite (H) von dem Kaltmedium (KM) durchströmt wird.

4. Verfahren nach einem der vorhergehenden Ansprüche, **dadurch gekennzeichnet, dass** das Energiespeichermedium (W) auf zwei strömungstechnisch voneinander abgetrennte Energiespeichermodule verteilt ist, wobei beide Energiespeichermodule an einen zu temperierenden Prozessraum anschließen und die Energiespeichermodule und der Prozessraum von einem durchgehenden Volumenstrom durchströmt werden, wobei beide Energiespeichermodule im zyklischen Gegentakt betrieben werden.

5. Verfahren nach Anspruch 4, **dadurch gekennzeichnet, dass** die Energiespeichermodule je nach Anforderung in beliebiger Art und Weise parallel oder in Reihe geschaltet werden können.

6. Verfahren nach einem der vorhergehenden Ansprüche, **dadurch gekennzeichnet, dass** die Zykluszeit ($t_{Zyklus}$) als die Zeitdauer von der Erhöhung der Temperatur auf der Kaltseite auf der einen bis zur Erhöhung auf der anderen Seite so eingestellt ist, dass diese klein gegenüber der Zeitdauer einer innerhalb des Energiespeichermediums (W) ablaufenden Wärmeleitung ist.

7. Verfahren nach einem der vorhergehenden Ansprüche, **dadurch gekennzeichnet, dass** das Verhältnis aus dem Zyklusvolumen $V_{Zyklus}$ und dem Totvolumen $V_{tot}$ des Fluids, innerhalb einer gegebenen Zykluszeit einen Wert von 100 nicht unterschreitet und vorteilhaft einen Wert im Bereich von 200, vorzugsweise mehr als 300 aufweist.

8. Verfahren nach einem der vorhergehenden Ansprüche, **dadurch gekennzeichnet, dass** die Umschaltzeit ($t_{tot}$) viel kleiner im Vergleich zur Zykluszeit ($t_{Zyklus}$) gewählt wird.

9. Verfahren nach einem der vorhergehenden Ansprüche, **dadurch gekennzeichnet, dass** eine Zuführung eines zusätzlichen Mediums im Prozessraum erfolgt.

10. Verfahren nach einem der vorhergehenden Ansprüche, **dadurch gekennzeichnet, dass** eine Abführung eines Mediums im Prozessraum erfolgt.

11. Verfahren nach Anspruch 9 und 10, **dadurch gekennzeichnet, dass**

das Zuführen und Abführen des Mediums zeitlich parallel erfolgt.

**12.** Verfahren nach einem der vorhergehenden Ansprüche,
**dadurch gekennzeichnet, dass**
der Prozessraum durch ein oder mehrere durchströmbare Medien teilweise bis vollständig gefüllt ist.

**13.** Verfahren nach einem der vorhergehenden Ansprüche,
**dadurch gekennzeichnet, dass**
das Verfahren zum Betreiben eines Kältereservoirs angewendet wird.

**14.** Vorrichtung zum Ausführen einer zyklischen Energiespeicherung an einem Prozessraum (P) mit einem Energiespeichermodul (8) mit folgenden Komponenten:

einem Energiespeicherkörper (8a) aus einem von einem fluiden Medium durchströmbaren Material in Form einer Füllung (5) mit einer geringen Wärmeleitfähigkeit,
eine den Energiespeicher (8a) mindestens teilweise umgebende äußere Wärmeisolierung (8b), mindestens je einen Anschluss zum Zu- und/oder
Ableiten eines Fluids (F) und mindestens einen am Energiespeicherkörper (8a)
angeordneten Sensor (S) in Form eines die Temperatur des Energiespeichermoduls (8) in der Füllung fortlaufend überwachenden Temperaturfühlers (7) und eine den Fluidstrom zu dem und durch das Energiespeichermedium (W) regelnde, insbesondere Pumpeinrichtungen und Ventilstellungen setzende, Steuereinheit.

**15.** Vorrichtung nach Anspruch 14,
**dadurch gekennzeichnet, dass**
der Energiespeicherkörper (8a) aus einer Keramik, einem Verbundmaterial oder einer Flüssigkeit mit geringer Wärmeleitfähigkeit besteht.

**16.** Vorrichtung nach Anspruch 14,
**dadurch gekennzeichnet, dass**
der Energiespeicherkörper (8a) aus einem oder mehreren Formkörpern z.B. Monolithen, Granulat oder Pulver besteht.

**17.** Vorrichtung nach Anspruch 14, 15 oder 16,
**gekennzeichnet durch**
eine Anordnung aus zwei, an den Prozessbereich anschließenden und strömungstechnisch direkt voneinander getrennten Energiespeichermodulen (8).

**18.** Vorrichtung nach einem der Ansprüche 14 bis 17,

**dadurch gekennzeichnet, dass**
die Energiespeichermodule (8) beidseitig linear an den Prozessbereich (9) angeschlossen sind.

**19.** Vorrichtung nach einem der Ansprüche 14 bis 18,
**dadurch gekennzeichnet, dass**
die Energiespeichermodule U-förmig an den Prozessbereich angeschlossen sind.

**20.** Vorrichtung nach einem der Ansprüche 14 bis 19,
**dadurch gekennzeichnet, dass**
die Energiespeicherkörper (8a) eine prismatische Form mit beliebig wählbarer Grundfläche aufweisen.

**Claims**

**1.** A method for carrying out a cyclic energy storage for a process space (P) in a cyclic operation using an energy storage medium (W) with a hot side (H) and a cold side (K) with the following method steps repeated within a cycle time ($t_{Zyklus}$) with the following energy storage cycle:

- heating up the energy storage medium (W) on the hot side (H) by means of a hot medium (HM) for initiating an energy transfer to the energy storage medium (W) from the hot side (H) to the cold side (K),
- continuously registering the sensor values on the cold side (K) of the energy storage medium (W) by means of a sensor (S) arranged on the cold side of the energy storage medium (W) and measuring the temperature of the energy storage medium (W) in the region of the cold side (K) and comparison with a preset threshold ($S_{Grenz}$) (Figs. 2 and 6),
- wherein a heat front (WF) progressing through the energy storage medium (W) and arriving on the cold side (K) is registered by the sensor (S),
- after reaching the threshold ($S_{Grenz}$), feeding a cold medium (KM) to the cold side (K) of the energy storage medium (W) and discharging the stored energy starting from the cold side (K) in the direction of the hot side (H) of the energy storage medium (W),
- wherein the heat front (WF) is forced back from the cold side (K) to the hot side (H) of the energy storage medium (W),
- renewed heating up of the energy storage medium (W) on the hot side (H) and start of a renewed energy storage cycle.

**2.** The method according to claim 1,
**characterized in that**
the cyclic operation has a start-up phase (An) and a working phase (Ar), wherein in the start-up phase a plurality of energy storage cycles are run through until the cycle time ($t_{Zyklus}$) has reached a constant limit cycle time ($t_{Grenz}$) for each energy storage cycle, and wherein in the working phase the energy storage cycles are each carried out within the limit cycle time ($t_{Grenz}$).

3. The method according to claim 1 or 2, **characterized in that** the energy storage medium (W) is formed as a thermally poorly conductive material, wherein the thermally poorly conductive material is flowed through from the hot side (H) in the direction of the cold side (K) by the hot medium (HM) and from the cold side (K) to the hot side (H) by the cold medium (KM).

4. The method according to one of the preceding claims, **characterized in that** the energy storage medium (W) is distributed over two energy storage modules separated from one another in terms of flow, wherein both energy storage modules adjoin a process space to be temperature-controlled and the energy storage modules and the process space are flowed through by a continuous volume flow, wherein both energy storage modules are operated in a cyclic push-pull mode.

5. The method according to claim 4, **characterized in that** the energy storage modules can be connected in parallel or in series in any desired manner depending on the requirement.

6. The method according to one of the preceding claims, **characterized in that** the cycle time ($t_{Zyklus}$) is set as the time period from the increase in the temperature on the cold side on the one hand to the increase on the other hand such that it is small compared with the time period of a heat conduction running within the energy storage medium (W).

7. The method according to one of the preceding claims, **characterized in that** the ratio of the cycle volume $V_{Zyklus}$ and the dead volume $V_{tot}$ of the fluid does not fall below a value of 100 within a given cycle time and advantageously has a value in the range of 200, preferably more than 300.

8. The method according to one of the preceding claims, **characterized in that** the switch-over time ($t_{tot}$) is chosen to be much smaller in comparison with the cycle time ($t_{Zyklus}$).

9. The method according to one of the preceding claims, **characterized in that** an additional medium is supplied in the process space.

10. The method according to one of the preceding claims, **characterized in that** a medium is discharged in the process space.

11. The method according to claim 9 and 10, **characterized in that** the medium is fed in and discharged in a temporally parallel manner.

12. The method according to one of the preceding claims, **characterized in that** the process space is partially to completely filled by one or more through-flowable media.

13. The method according to one of the preceding claims, **characterized in that** the method is used for operating a cooling reservoir.

14. A device for carrying out a cyclic energy storage at a process space (P) with an energy storage module (8) with the following components:

   an energy storage body (8a) made of a material through which a fluid medium can flow in the form of a filling (5) with a low thermal conductivity,
   an outer thermal insulation (8b) at least partially surrounding the energy storage body (8a), at least one connection each for supplying and/or discharging a fluid (F) and at least one sensor (S) arranged on the energy storage body (8a) in the form of a temperature detector (7) continuously monitoring the temperature of the energy storage module (8) in the filling and a control unit regulating the fluid flow to and through the energy storage medium (W), in particular setting pumping devices and valve positions.

15. The device according to claim 14, **characterized in that** the energy storage body (8a) consists of a ceramics, a composite material or a liquid with low thermal conductivity.

16. The device according to claim 14, **characterized in that** the energy storage body (8a) consists of one or more moulded bodies, e.g. monoliths, granules or powders.

17. The device according to claim 14, 15 or 16, **characterized by** an arrangement of two energy storage modules (8) adjoining the processing region and directly separated from one another in terms of flow.

**18.** The device according to one of claims 14 to 17, **characterized in that** the energy storage modules (8) are linearly connected to the processing region (9) on both sides.

**19.** The device according to one of claims 14 to 18, **characterized in that** the energy storage modules are connected to the processing region in a U-shaped manner.

**20.** The device according to one of claims 14 to 19, **characterized in that** the energy storage bodies (8a) have a prismatic shape with an arbitrarily selectable base area.

**Revendications**

**1.** Procédé pour réaliser un stockage d'énergie cyclique pour un espace de processus (P) dans un fonctionnement cyclique en utilisant un moyen de stockage d'énergie (W) avec un côté chaud (H) et un côté froid (K) avec les étapes de procédé suivantes répétées dans un temps de cycle ($t_{Zyklus}$) avec le cycle de stockage d'énergie suivant :

- chauffer le moyen de stockage d'énergie (W) sur le côté chaud (H) au moyen d'un moyen chaud (HM) pour initier un transfert d'énergie au moyen de stockage d'énergie (W) du côté chaud (H) au côté froid (K),
- enregistrer en continu les valeurs de capteur sur le côté froid (K) du moyen de stockage d'énergie (W) au moyen d'un capteur (S) disposé sur le côté froid du moyen de stockage d'énergie (W) et mesurant la température du moyen de stockage d'énergie (W) dans la région du côté froid (K) et comparaison avec une valeur limite préréglée ($S_{Grenz}$) (figures 2 et 6),
- dans lequel enregistrer un front thermique (WF) progressant à travers le moyen de stockage d'énergie (W) et arrivant sur le côté froid (K) est effectué par le capteur (S),
- après avoir atteint la valeur limite ($S_{Grenz}$), amener un moyen froid (KM) au côté froid (K) du moyen de stockage d'énergie (W) et décharger l'énergie stockée en commençant par le côté froid (K) en direction du côté chaud (H) du moyen de stockage d'énergie (W),
- dans lequel repousser le front thermique (WF) du côté froid (K) vers le côté chaud (H) du moyen de stockage d'énergie (W) est effectué,
- chauffer à nouveau le moyen de stockage d'énergie (W) sur le côté chaud (H) et commencer un nouveau cycle de stockage d'énergie.

**2.** Procédé selon la revendication 1, **caractérisé en ce que** le fonctionnement cyclique présente une phase de démarrage (An) et une phase de travail (Ar), dans lequel, dans la phase de démarrage, plusieurs cycles de stockage d'énergie sont effectués jusqu'à ce que le temps de cycle ($t_{Zyklus}$) pour chaque cycle de stockage d'énergie ait atteint un temps de cycle limite constant ($t_{Grenz}$), et dans lequel, dans la phase de travail, les cycles de stockage d'énergie sont réalisés à chaque fois dans le temps de cycle limite ($t_{Grenz}$).

**3.** Procédé selon la revendication 1 ou 2, **caractérisé en ce que** le moyen de stockage d'énergie (W) est réalisé sous forme de matériau thermiquement peu conducteur, dans lequel le matériau thermiquement peu conducteur est traversé par le côté chaud (H) en direction du côté froid (K) par le moyen chaud (HM) et par le côté froid (K) vers le côté chaud (H) par le moyen froid (KM).

**4.** Procédé selon l'une quelconque des revendications précédentes, **caractérisé en ce que** le moyen de stockage d'énergie (W) est réparti sur deux modules de stockage d'énergie séparés fluidiquement l'un de l'autre, dans lequel les deux modules de stockage d'énergie se raccordent à un espace de processus à tempérer et les modules de stockage d'énergie et l'espace de processus sont traversés par un flux volumique continu, dans lequel les deux modules de stockage d'énergie fonctionnent en opposition cyclique.

**5.** Procédé selon la revendication 4, **caractérisé en ce que** les modules de stockage d'énergie peuvent être connectés en parallèle ou en série d'une manière quelconque en fonction de la demande.

**6.** Procédé selon l'une quelconque des revendications précédentes, **caractérisé en ce que** le temps de cycle ($t_{Zyklus}$) est réglé comme la durée de l'augmentation de la température du côté froid d'un côté à l'augmentation de l'autre côté de telle sorte que celle-ci soit petite par rapport à la durée d'une conduction thermique se déroulant à l'intérieur du moyen de stockage d'énergie (W).

**7.** Procédé selon l'une quelconque des revendications précédentes, **caractérisé en ce que** le ratio du volume de cycle $V_{Zyklus}$ et du volume mort $V_{tot}$ du fluide, dans un temps de cycle donné, n'est pas inférieur à une valeur de 100 et présente de manière avantageuse une valeur dans la plage de 200, de préférence supérieure à 300.

**8.** Procédé selon l'une quelconque des revendications précédentes,

**caractérisé en ce que**
le temps de commutation ($t_{tot}$) est choisi beaucoup plus petit par comparaison au temps de cycle ($t_{Zyklus}$).

9. Procédé selon l'une quelconque des revendications précédentes,
   **caractérisé en ce que**
   une alimentation d'un moyen supplémentaire est effectuée dans l'espace de processus.

10. Procédé selon l'une quelconque des revendications précédentes,
    **caractérisé en ce que**
    une évacuation d'un moyen est effectuée dans l'espace de processus.

11. Procédé selon les revendications 9 et 10,
    **caractérisé en ce que**
    l'amenée et l'évacuation du moyen sont effectuées en parallèle dans le temps.

12. Procédé selon l'une quelconque des revendications précédentes,
    **caractérisé en ce que**
    l'espace de processus est rempli partiellement à complètement par un ou plusieurs moyens pouvant être traversés.

13. Procédé selon l'une quelconque des revendications précédentes,
    **caractérisé en ce que**
    le procédé est utilisé pour faire fonctionner un réservoir froid.

14. Dispositif pour réaliser un stockage d'énergie cyclique sur un espace de processus (P) avec un module de stockage d'énergie (8) avec les composants suivants :

    un corps de stockage d'énergie (8a) en un matériau pouvant être traversé par un moyen fluide sous forme d'un remplissage (5) avec une faible conductibilité thermique,
    une isolation thermique extérieure (8b) entourant au moins partiellement le corps de stockage d'énergie (8a), au moins à chaque fois un raccord pour l'amenée et/ou l'évacuation d'un fluide (F) et au moins un capteur (S) disposé sur le corps de stockage d'énergie (8a) sous forme d'un détecteur de température (7) surveillant en continu la température du module de stockage d'énergie (8) dans le remplissage et une unité de contrôle réglant le flux de fluide vers et à travers le moyen de stockage d'énergie (W), plaçant en particulier des dispositifs de pompage et des positions de soupape.

15. Dispositif selon la revendication 14,
    **caractérisé en ce que**
    le corps de stockage d'énergie (8a) se compose d'une céramique, d'un matériau composite ou d'un liquide avec une faible conductibilité thermique.

16. Dispositif selon la revendication 14,
    **caractérisé en ce que**
    le corps de stockage d'énergie (8a) se compose d'un ou de plusieurs corps moulés, par exemple de monolithes, de granulés ou de poudres.

17. Dispositif selon la revendication 14, 15 ou 16,
    **caractérisé par**
    un agencement de deux modules de stockage d'énergie (8) se raccordant à la zone de processus et séparés fluidiquement directement l'un de l'autre.

18. Dispositif selon l'une quelconque des revendications 14 à 17, **caractérisé en ce que**
    les modules de stockage d'énergie (8) sont raccordés linéairement des deux côtés à la zone de processus (9).

19. Dispositif selon l'une quelconque des revendications 14 à 18, **caractérisé en ce que**
    les modules de stockage d'énergie sont raccordés en forme de U à la zone de processus.

20. Dispositif selon l'une quelconque des revendications 14 à 19, **caractérisé en ce que**
    les corps de stockage d'énergie (8a) présentent une forme prismatique avec une surface de base pouvant être choisie de manière quelconque.

Fig. 1

Fig. 2

Fig. 3

Fig. 4

Fig. 5

Fig. 6

Fig. 7

Fig. 8

Fig. 9

Fig. 10

EP 3 891 457 B1

Fig. 11

25

Fig. 12

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2016150462 A1